# EUROPEAN PATENT APPLICATION

(11) **EP 1 782 872 A1**
(43) Date of publication of application: **09.05.2007**
(21) Application number: 05024146.2
(22) Date of filing: 04.11.2005
(51) Int. Cl.: B01D 29/11

(54) **Fluid filtration arrangement**

(71) Applicant: Perkins Engines Company Limited, Peterborough PE1 5NA (GB)
(72) Inventor: Wright, Philip G., Spalding Lincs PE12 6AP (GB)
(74) Representative: Wagner, Karl H.

(57) **Abstract**

A self-flushing fluid filtration arrangement is disclosed wherein an oil flow is separated in two different flows. A first flow is filtered through a filter element whilst a second flow is not filtered although it may flow through the element. The second flow continuously flushes the surface of the filter element to remove particles filtered from the first flow.

## Description

### Technical Field

The present disclosure relates to fluid filtration arrangements and more particularly to a fluid filtration arrangement associated with a first and second fluid passage.

### Background

Many types of equipment having rotating or reciprocating parts utilize some form of lubrication circuit to reduce component wear, cool components and promote operating efficiencies by reducing friction between parts. Internal combustion engines for example may have elaborate forced lubrication systems wherein one or more pumps are responsible for pumping a continuous flow of lubrication fluid through a cylinder block and head and through components such as turbochargers. The lubrication fluid tends to be a dedicated lubrication fluid such as oil, but may also be a fluid shared with other functional systems, such as actuation systems for valves or injectors. Fluid conditioning is an important factor to increase the life expectancy of both the fluid and the equipment it is used in. Many applications require some form of fluid cooling to prevent a degradation of the desired fluid properties and nearly all forced lubrication systems have at least one or more filters for removing particles from the fluid. Particles may for example be introduced when the system is filled or topped up but particles also appear over time due to wearing parts. The level of required filtration may vary considerably between the various components due to different clearances between moving parts. If one filter is used to filter all of the fluid, the designer is forced to select a filtration size that will protect the component with the smallest clearance even though that component may only require a fraction of all the lubrication fluid available. This may cause problems, because fine filters get blocked quicker than coarse filters and create higher back pressures. One solution would be to introduce a main coarse filter that will sufficiently protect the bulk of all components and to apply an second traditional filter for filtering a portion of the fluid down to a smaller particle size. However, this filter is then again prone to getting blocked prematurely and requiring early service. Furthermore, main system filters are commonly provided with a biased by-pass allowing fluid to by-pass the filter in case the filter creates a back pressure which exceeds an acceptable level. This may happen during cold start conditions when the viscosity of the fluid is high or when the filter is blocked, for example because of a service interval having been exceeded. Certain components may have a higher tolerance to contaminated fluids than others. It may therefore be preferred to provide secondary protection for the more critical components in case the fluid by-pass of the main system filter opens, whilst trying to minimize the risk of clogging this secondary filter.

The present disclosure is aimed at overcoming one or more of the aforementioned disadvantages.

### Summary of the Invention

In accordance with the present invention there is provided a filtration arrangement having a first passage with a filter element arranged in that first passage. The filter element is located between a first upstream section of the first passage and a second downstream section of the first passage. Furthermore, the arrangement has a second passage fluidly connected with the first passage such that a first fluid flow can flow from the first passage through the filter element to the second passage. The filter element is arranged such that a second fluid flow can flow from the first section to the second section of the first passage.

In another embodiment a self-cleaning filtration arrangement includes three passages with a filter surface arranged between the first and second passage such that fluid flowing from the first to the second passage is filtered by flowing through the filter surface and that fluid flowing from the first to the third passage acts to clean the filter surface.

A further embodiment discloses a method for filtering fluid including the steps of receiving fluid from a first direction, directing a first portion of said fluid through the filter surface into a second direction, and directing the remainder of the fluid into a third direction thereby flushing the filter surface with a portion of the remainder of the fluid.

### Brief Description of the Drawings

Fig. 1 is a schematic cross-sectional view of an in situ filter element in accordance with an embodiment of with the current disclosure;
Fig. 2 shows a perspective view of the filter element of Fig. 1;
Fig. 3 is a schematic representation of another embodiment in accordance with the current disclosure; and
Fig. 4 shows a diagrammatic representation of a fluid circuit suitable for a filter element in accordance with the present disclosure.

### Detailed Description

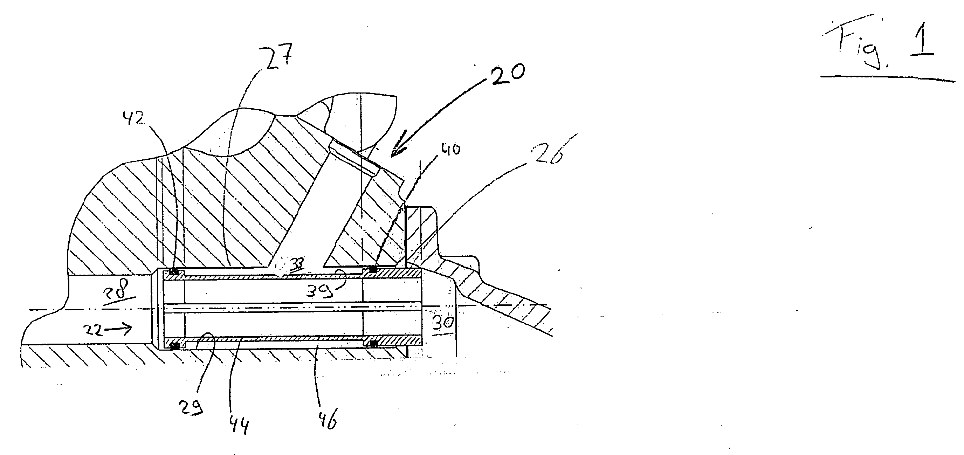

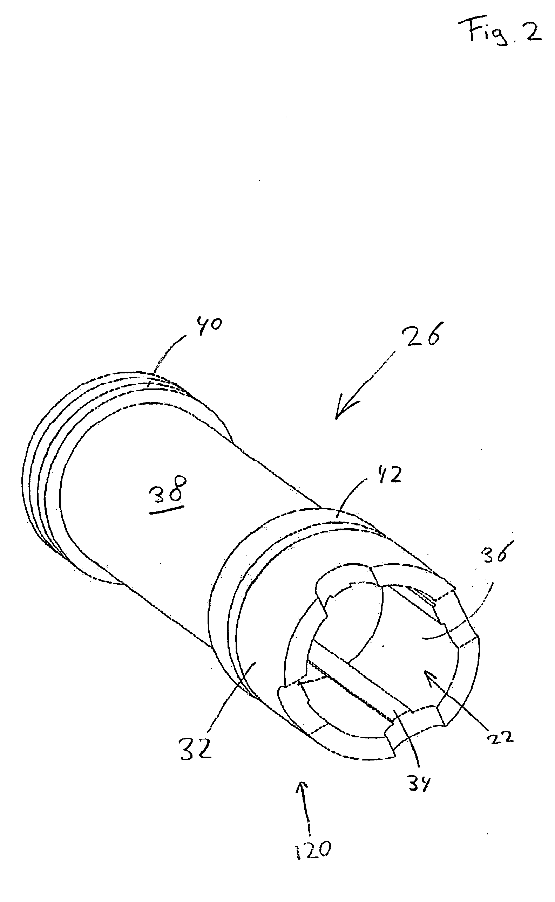

Referring to Figs. 1 and 2, there is shown an embodiment of a filtration arrangement 20. A passage 27 has an internal wall 29. A filter element 26 is arranged within a passage 27 such that a first section 28 of the passage 27 is located upstream of the filter 26 and a second section 30 of the passage 27 is downstream of the filter 26. A fluid flows in the direction of arrow 22. Alternatively, the fluid may flow in a direction opposite to the arrow 22. In one embodiment the filter 26 may have a frame structure 32 for holding a filtering portion 38 wherein the frame structure 32 is made from a resilient material such as plastic or metal, etc. In another embodiment the filter has a solid structure made from a similar resilient material, but at least a portion of the structure may act as a filter. Alternatively, a mixture of both structures may also suitable. Aspects of both the solid structure or the frame structure fitted with the semi-permeable element as described hereunder are similar so only the latter will be described in further detail.

The frame structure 32 may be constructed as suited and may have strengthening elements such as ribs 34 and open end portions 36. In one embodiment, the end portions may be tapered to ease fitting and may have retaining or locating portions such as flanges, clips and the like.

The filtering portion 38 may be regarded as semi-permeable which is to be interpreted as permitting the passage of certain components or certain size components but being impermeable to others. The filtering portion 38 may be a gauze and may be fitted internally or externally of the frame 32 and strengthening ribs 34. The gauze 38 may form a continuous peripheral wall 39 or consist of several pieces of gauze fitted to the frame to form the peripheral wall 39. The frame and gauze may be formed in any tubular shape, for example like an elongated cylindrical, square rectangular, octagonal or triangular tube. The tubular shape may be such that the peripheral wall 39 is concentric to the internal wall 29. If gauze is used to form the semi-permeable portion of the filter, it may be made from a variety of suitable semi-permeable materials including a mixture of materials, and the gauze size used may be application dependent, for example 40 µm. The gauze may also be provided with surface contours or other details such as, for example, protrusions, vanes, fins and louvers to aid filtering, to improve flow characteristics or to influence the interaction of a fluid with the filter element. A section 44 of frame 32 may have an external diameter which is smaller than the internal diameter of the corresponding part of the passage 27 such as to form a chamber 46. This chamber 46 allows fluid that has traveled through the semi-permeable wall to flow freely around all or a portion of the external periphery if so preferred. Therefore fluid can travel through the filter in a direction that is away from the second passage, but is then directed to said second passage by the chamber 46. This substantially increases the effective area available for the gauze 38 and hence increases the flow capacity of the filter. In fluid connection with the chamber 46 is a second passage 32 having an inlet 33. The cross-sectional area of inlet 33 may be smaller than the effective area of the gauze 38. Near either end of the frame 32 there may be provided a sealing arrangement such as a downstream seal 40 and an upstream seal 42. This sealing arrangement prevents a direct fluid exchange between the chamber 46 and the upstream and downstream portions 28 and 30. The sealing arrangement may also form part of a retention arrangement that holds the filter element in its preferred position.

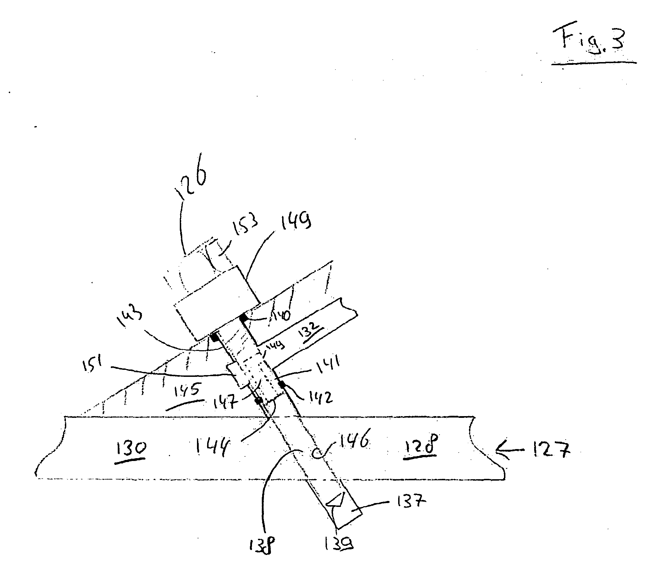

A further embodiment of a filtration arrangement 120 according to the present disclosure is shown in Fig. 3. Like elements are indicated by like numerals. A filter element 126 is positioned in a first passage 127 such that there is a section 128 of the first passage 127 upstream of the filter element 126 and a section 130 of the first passage 127 downstream of the filter 126. The filter element 126 may be an insertable cartridge having several portions. A first portion of the filter element 126 may be a filtering portion 138 forming a peripheral wall 146 and may be closed off at one end 139. The filtering portion 138 may be a gauze as described above. The filtering portion 138 may be shaped into an elongated form such as a cylindrical or rectangular tube and may be reinforced with a frame or cage like structure (not shown). The effective area of the filtering portion 138 may be greater than the cross-sectional diameter of the inlet 144 of a channel 147 that forms the exit of the elongated form of filtering portion 138. The closed off end 139 may be rounded or pointed to aid inserting and locating the element into recess 137.

A portion 141 of the filter element 126 has a threaded section 143 engaged with a threaded portion of the base component 145 in which the passage is located. The channel 147 runs from the first portion 138 through the second portion 141 and forms an exit 149 through a wall of the portion 141. The channel 147 forms a fluid connection between the first portion 138 and a second passage 132. Multiple exits 149 may be provided if preferred and a circumferential groove 151 may be provided in the base component 145 or in the second portion 141 (not shown) to improve the connection between passage 147 and passage 132. The second portion 141 may be provided with a sealing arrangement formed by for example seals 140 and 142. Seal 142 prevents the exchange between passage 128 and 132 of fluid that has not traveled through the gauze. Seal 140 prevents fluid from escaping from underneath the third portion 149.

The third portion 149 of filter element 126 may include an engagement portion such as a standard hexagon 153 for fastening the filter element 126 into the base component 145.

Although a threaded engagement of base component 145 and filter element 126 is shown, this may be replaced by any other suitable retention method, for example a clamping device.

### Industrial Applicability

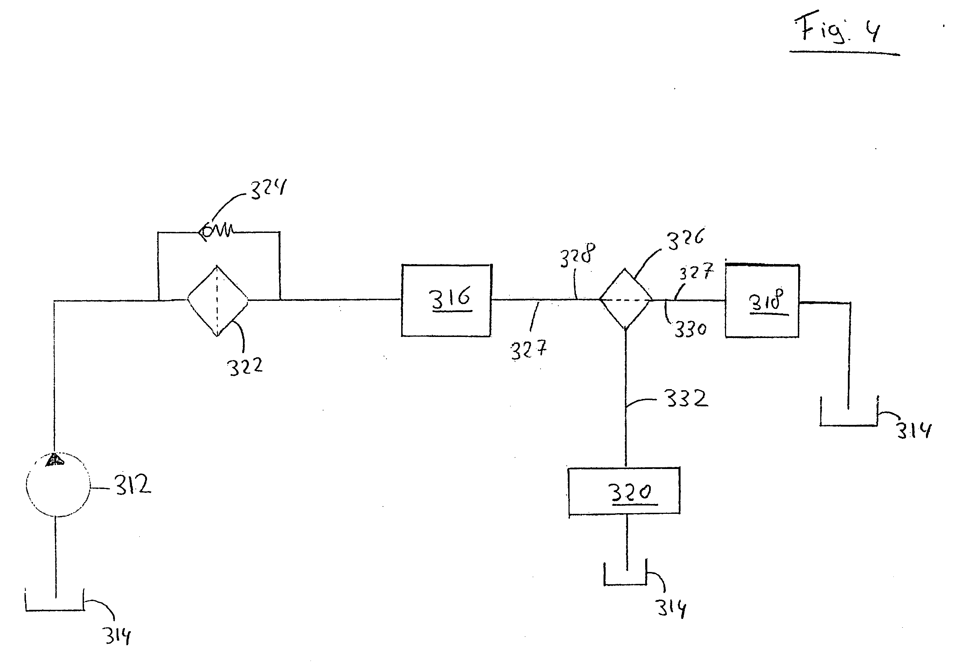

A suitable application for the embodiments of the current disclosure is shown in Fig. 4. The system as shown for illustration purposes only is a lubrication system for an internal combustion engine, but it is to be noted that the principle is equally applicable to lubrication systems for other equipment or to other fluid arrangements such as actuation systems, cooling systems, power transfer arrangements or a combination of any of the aforementioned. The system shown is highly simplified for clarity. A pump 312 draws oil from a reservoir 314 for lubricating and cooling a set of downstream components such as for example a cylinder head 316, a cylinder block 318 and a turbocharger 320. The components may be connected in any suitable arrangement including serial, parallel or a combination of both and they may be in any order. Oil expelled from pump 312 is forced through a main system filter 322 which is provided with a spring loaded by-pass 324. By-pass 324 is provided as a safety valve when filter 322 is causing a high back pressure restricting oil flow through the filter due to for example a blocked filter or high oil viscosity at start up. Oil from filter 322 or by-pass 324 flows through the cylinder head 316 to secondary filter 326 via an upstream section 328 of a passage 327. The secondary filter 326 filters the portion of the oil which flows towards turbocharger 320 via passage 332, but allows an unfiltered flow of oil to cylinder block 318 via a downstream section 330 of passage 327. Return oil from turbocharger 320 and cylinder block 318 flows back to reservoir 314. A filter in accordance with any of the embodiments as disclosed would be particularly useful in this application due to its self-cleaning characteristics. For example, the filter 326 may receive lubrication oil from a cylinder head 316. The lubrication oil may have collected debris from the cylinder head 316 which is flowing towards the filter element 326. The debris present in the oil may be detrimental to the turbocharger 320, but may be relatively harmless to any of the components of the cylinder block 318. Therefore a filter element like the filter 326 will be placed such that the oil is further filtered prior to entering the passage 327. The flow restriction caused by downstream components of the cylinder block 318 create a sufficient pressure for oil to be forced through the semi-permeable portion of the filter thereby providing the turbocharger 320 with a further filtered supply of oil. Some or all of the debris caught by the filtering portion of filter element 126 is flushed or removed from the surface of the gauze by the flow from the upstream section 328 to the downstream section 332, thereby keeping the filter element 326 clean. A similar effect may be achieved by using a filter element such as filter 126. The pressure in the passage 127 is sufficient to force oil through the filtering portion 138 and to travel through passage 147 into passage 132 and hence to the turbocharger. Oil may flow the full 360° around the filtering portion 138 so a large surface area is available for the oil to pass through the filtering portion and thereby filtering out the debris. The oil flow that continues into downstream passage 130 removes the debris from the surface of the filtering portion thereby keeping the filtering portion clean and permeable for oil and particles smaller than pore size of the filtering portion.

A strategy to aid the self cleaning characteristic of the filter element in any of the aforementioned embodiments may be to manipulate a fluid parameter such as the volume of oil per unit of time, i.e. the flow rate. For example, the flow may be increased temporarily via a control mechanism activated by a timer. Alternatively, a sensor or sensor array may be added to measure at least one fluid parameter such as a pressure or pressure drop over the filter element. Certain pressures or pressure drops may indicate that the filter surface is getting clogged in spite of the self-cleaning characteristic and may act as a threshold for manipulation of one or more fluid parameters. This may for example be the case when a substantial component failure upstream of the filter element causes high levels of debris in the fluid. The high debris level causes an accelerated clogging of the filter in response to which the fluid parameters may be manipulated. The manipulation may include actions such as increasing, decreasing or pulsing the volume or pressure levels, for example by changing pump speed or changing valve states. This may improve the state of the filter surface as a higher number of particles may be dislodged from the filter surface than without manipulation. This may all be done during normal engine operation.

Although the preferred embodiments of this invention have been described herein, improvements and modifications may be incorporated without departing from the scope of the following claims.

## Claims

1. A filtration arrangement comprising;
a first passage,
a filter element arranged within said first passage between a first section of said first passage upstream of said filter element and a second section of said first passage downstream of said filter element, and
a second passage fluidly connected with said first passage such that a first fluid flow can flow from said first passage through at least a portion of said filter element to said second passage;
said filter element being arranged such that a second fluid flow can flow from said first section to said second section of said first passage.

2. A filtration arrangement according to claim 1, wherein said second fluid flow can flow unfiltered from said first section to said second section of said first passage.

3. A filtration arrangement according to claim 1 or 2, wherein said filter element has a peripheral wall defining a tubular section, said wall having at least a portion which is semi-permeable.

4. A filtration arrangement according to any of the preceding claims, wherein said filter element is arranged in said first passage such that said second fluid flow acts to flush said semi-permeable wall of said filter element.

5. A filtration arrangement according to claim 3, wherein said peripheral wall is substantially concentric to said wall defining said first passage.

6. A filtration arrangement according to any of claims 3 to 5, wherein said tubular section has a first open end near said first upstream section and a second open end near said second downstream section, such that said first fluid flow can flow through said first open end and said semi-permeable portion into said second passage and said second fluid flow can flow through said first open end and said second open end.

7. A filtration arrangement according to any of preceding claims, wherein said filter element has a sealing arrangement for preventing unfiltered fluid from flowing from said first upstream section into said second passage.

8. A filtration arrangement according to any of the preceding claims, wherein said filter element has a sealing arrangement for preventing unfiltered fluid from flowing from said second downstream section into said second passage.

9. A filtration arrangement according to any of the preceding claims, wherein at least a portion of said filter element is adapted to allow said first fluid flow to pass through the filter element in direction away from said second passage.

10. A filtration arrangement according to any of claims 3 to 9, wherein said tubular section has a semi-permeable surface in said first passage, such that said first fluid flow can flow through said semi-permeable surface into said second passage and said second fluid flow can flow around said filter element from said first section to said second section of said first passage.

11. A filtration arrangement according to any of the preceding claims, wherein second passage has an inlet and said semi-permeable surface has a surface area greater than the cross-sectional area of said inlet of said second passage.

12. An internal combustion engine having a filtration arrangement according to any of the preceding claims, wherein said second passage is a feed passage for lubrication oil to a turbocharger.

13. A self-cleaning filtration arrangement comprising;
a first, a second and a third passage for transferring fluid,
a filter surface arranged between said first passage and said second passage such that fluid flowing from said first passage to said second passage is filtered by flowing through said filter surface and that fluid flowing from said first passage to said third passage acts to clean said filter surface.

14. A self-cleaning filtration arrangement according to claim 13, wherein said filter surface is located within said first passage.

15. A method for filtering a fluid with a self-cleaning filter surface,
said method comprising the following steps;
receiving a fluid from a first direction,
directing a first portion of said fluid through said filter surface into a second direction,
directing the remainder of said fluid into a third direction thereby flushing said filter surface with a portion of said remainder of said fluid.

16. A method for filtering fluid with a self cleaning filter surface according to claim 15, wherein the state of said filter surface may be improved during operation by manipulating a fluid parameter.

17. A method for filtering fluid with a self cleaning filter surface according to claim 16, wherein said method further comprises the steps of sensing a fluid parameter and manipulating a fluid parameter in response to said sensed fluid parameter.

18. A method for filtering fluid with a self cleaning filter surface according to claim 17 wherein said sensed fluid parameter is a fluid pressure.

19. A method for filtering fluid with a self cleaning filter surface according to any of claims 16 to 18 wherein said manipulated fluid parameter is the flow rate of said fluid.

20. A method for filtering fluid with a self cleaning filter surface according to claim 18 wherein said fluid parameter is manipulated after said fluid pressure passes a predetermined threshold.

21. A method for filtering fluid with a self cleaning filter surface according to claim 16 wherein said fluid parameter is manipulated after a predetermined time interval.
